# DEMANDE DE BREVET EUROPEEN

(11) **EP 4 629 401 A1**
(43) Date de publication de la demande: **08.10.2025**
(21) Numéro de dépôt: 24305514.2
(22) Date de dépôt: 03.04.2024
(51) Int. Cl.: H01M 10/613, H01M 10/625, H01M 10/647, H01M 10/6556, H01M 50/271

(54) **MODULE DE STOCKAGE D'ÉNERGIE COMPRENANT UN COUVERCLE INCORPORANT DES CONNEXIONS FLUIDIQUES**

(71) Demandeur: Automotive Cells Company SE, 33520 Bruges (FR)
(72) Inventeur: FRESNEAU, Aymeric, 33400 TALENCE (FR); MARATHE, Dimitri, 33310 LORMONT (FR); FAT-CHEUNG, Adrien, 33520 BRUGES (FR)
(74) Mandataire: Lavoix

(57) **Abrégé**

L'invention concerne un module (10) de stockage d'énergie comprenant :
- une pluralité de cellules électrochimiques (22) successives,
- un boitier (12) comprenant un fond (14) et une paroi latérale (16),
- un couvercle (18) fermant le boitier (12) et définissant avec le boitier (12) un volume interne (20) recevant les cellules (22).

Le couvercle (18) comprend au moins une entrée (52) et une sortie (54) pour un fluide de refroidissement (55), le couvercle (18) et le boitier (12) définissant un chemin de circulation du fluide (55) dans le couvercle (18) et dans le volume interne (20) entre l'entrée (52) et la sortie (54).

## Description

La présente invention concerne un module de stockage d'énergie du type comprenant :
- une pluralité de cellules électrochimiques successives suivant une direction longitudinale,
- un boitier comprenant un fond et une paroi latérale,
- un couvercle fermant le boitier et définissant avec le boitier un volume interne destiné à recevoir la pluralité de cellules, le couvercle comprenant une face interne dirigée vers le volume interne et une face externe opposée à la face interne selon une direction d'élévation perpendiculaire au couvercle.

L'invention concerne aussi un procédé de refroidissement d'un tel module de stockage d'énergie.

L'invention s'applique en particulier à la réalisation d'une batterie, notamment pour véhicule électrique ou hybride. On entend par « batterie » une pluralité de cellules électrochimiques reliées électriquement les unes aux autres. Selon un exemple particulier de batterie, la pluralité de cellules électrochimiques est agencée sous la forme d'un ou plusieurs module(s) de stockage d'énergie, chaque module comprenant plusieurs cellules électrochimiques raccordées électriquement les unes aux autres et assemblées mécaniquement les unes avec les autres.

Un module comprend une pluralité de cellules électrochimiques successives disposées dans un boîtier. Chaque cellule est constituée d'un empilement d'éléments électrochimiques connu sous le terme anglais de « stack », placé dans une boîte formée d'un godet connu sous le terme anglais de « can », fermé par un couvercle. L'empilement comprend notamment des électrodes positives et des électrodes négatives formant des feuillets séparés par une couche de séparation.

Les électrodes positives de chaque cellule sont en général reliées à une borne positive située sur une face latérale du boitier, et les électrodes négatives reliées à une borne négative. Pour réaliser ces connexions, les électrodes comprennent d'une part des portions qui dépassent de l'empilement et qui sont soudées les unes aux autres et sur un organe de contact, et d'autre part un ensemble de connecteur reliant chaque organe de contact à l'une des bornes.

Il est connu de faire circuler un fluide de refroidissement dans le boitier d'un ou plusieurs modules constituant la batterie, en particulier entre chaque cellule électrochimique de chaque module afin de les refroidir lors de leur fonctionnement et d'éviter ainsi une surchauffe de la batterie. Le refroidissement des cellules permet en outre d'accélérer la vitesse de charge et de ralentir le vieillissement des cellules.

Il est alors courant de ménager une entrée et une sortie pour le fluide de refroidissement sur les faces latérales du boitier, afin de faire circuler le fluide d'un côté du boitier à l'autre.

Par conséquent, le boitier doit être étanche pour éviter toute fuite du fluide de refroidissement, ce qui complexifie son design et sa fabrication.

Un but de l'invention est donc de fournir un module de stockage d'énergie comprenant un boitier simple à fabriquer, le module permettant un refroidissement efficace des cellules et présentant une bonne étanchéité.

A cet effet, l'invention a pour objet un module de stockage d'énergie dans lequel le couvercle comprend au moins une entrée et une sortie pour un fluide de refroidissement, le couvercle et le boitier définissant un chemin de circulation du fluide dans le couvercle et dans le volume interne entre l'entrée et la sortie.

Les entrée et sortie du circuit de refroidissement étant situées sur le couvercle, le boitier peut être réalisé de manière simple et étanche.

Par ailleurs, le boitier et le couvercle définissant un chemin de circulation du fluide entre l'entrée et la sortie, les cellules sont efficacement refroidies lors de la circulation du fluide de refroidissement.

Selon des modes particuliers de réalisation, le module de stockage d'énergie comprend l'une ou plusieurs des caractéristiques suivantes, prise(s) isolément ou selon toutes les combinaisons techniquement possibles :
- les cellules sont disposées à l'écart du fond dans la direction d'élévation, et à l'écart les unes des autres selon la direction longitudinale, le chemin de circulation s'étendant entre le fond et les cellules et entre deux cellules successives de l'une quelconque de la pluralité de cellules ;
- le couvercle comprend une portion saillante s'étendant en saillie de la face interne du couvercle dans la direction d'élévation vers le fond du boitier ;
- la portion saillante définit un passage de circulation pour le fluide de refroidissement entre l'entrée et le volume interne ;
- la portion saillante s'étend entre la pluralité de cellules et la paroi latérale du boitier ;
- la portion saillante s'étend sur une hauteur, dans la direction d'élévation, comprise entre 1,0 % et 91 % de la hauteur de la paroi latérale du boitier dans la direction d'élévation ;
- la face interne définit au moins un orifice collecteur liant fluidiquement le volume interne à la sortie ;
- la portion saillante et la sortie s'étendent sur deux extrémités du couvercle opposées selon la direction longitudinale ;
- la portion saillante et l'entrée s'étendent sur deux extrémités du couvercle opposées selon la direction longitudinale, un conduit de circulation du fluide étant défini dans le couvercle entre l'entrée et la portion saillante ;
- le couvercle comprend une première portion fermant le boitier et une seconde portion prolongeant la première portion selon la direction longitudinale, l'entrée et la sortie étant situées sur la face interne de la seconde portion ;
- la portion saillante et l'entrée s'étendent sur une même extrémité du couvercle, prise selon la direction longitudinale ;
- le couvercle comprend au moins un premier élément d'obturation mobile entre une position ouverte, dans laquelle l'au moins un premier élément d'obturation autorise la circulation du fluide dans le passage de circulation formé par la portion saillante, et une position fermée, dans laquelle l'au moins un premier élément d'obturation obture le passage de circulation formé par la portion saillante, le fluide étant destiné à circuler via un canal de circulation défini dans le couvercle entre l'entrée et la sortie ;
- le couvercle comprend au moins un deuxième élément d'obturation mobile entre une position ouverte dans laquelle le ou chaque deuxième élément d'obturation autorise la circulation du fluide depuis le volume interne jusqu'à la sortie via un orifice collecteur défini dans la face interne et liant fluidiquement le volume interne à la sortie, et une position fermée, dans laquelle le ou chaque deuxième élément d'obturation obture l'orifice collecteur ; et
- le ou chaque élément d'obturation est adapté pour passer de la position ouverte à la position fermée lorsqu'une valeur seuil de température dans le volume interne est dépassée.

L'invention a aussi pour objet un procédé de refroidissement, comprenant les étapes suivantes :
- obtention d'un module tel que décrit ci-dessus, et
- circulation du fluide de refroidissement entre l'entrée et la sortie dans le chemin de circulation.

L'invention sera mieux comprise à la lecture de la description qui va suivre, donnée uniquement à titre d'exemple et faite en se référant aux dessins annexés, sur lesquels :
- la figure 1 est une vue en perspective d'un module de stockage d'énergie selon l'invention et selon un premier mode de réalisation, le couvercle étant éloigné du boitier,
- la figure 2 est une vue en perspective isolée du couvercle du module de la figure 1,
- la figure 3 est une vue en coupe au niveau de la sortie du couvercle de la figure 2, le couvercle fermant le boitier,
- la figure 4 est une représentation schématique, en coupe, d'un module selon un deuxième mode de réalisation, et
- la figure 5 est une vue représentation schématique, en coupe, du module de la figure 4, fonctionnant selon un mode dégradé.

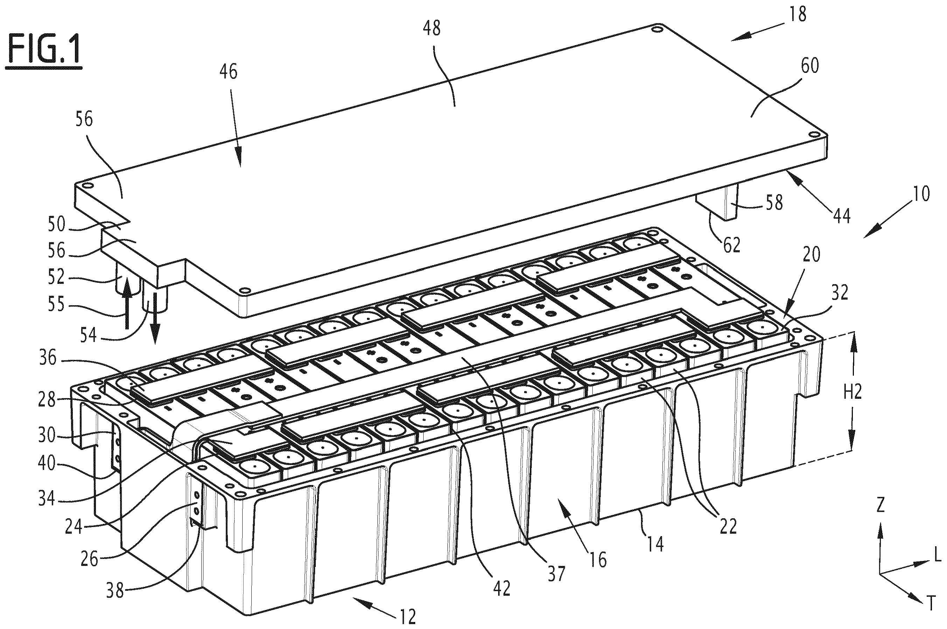

En références aux figures 1 à 3, on décrit un module de stockage d'énergie 10 selon un premier mode de réalisation.

Le module 10 est par exemple destiné à être intégré, avantageusement avec d'autres modules 10 similaires (non représentés), dans une batterie (non représentée), notamment pour un véhicule électrique ou hybride (non représenté).

Le module 10 a par exemple une forme générale parallélépipédique.

Le module 10 comprend un boitier 12 comprenant un fond 14 et une paroi latérale 16, ainsi qu'un couvercle 18 fermant le boitier 12. Le couvercle 18 définit avec le boitier 12 un volume interne 20.

Tel qu'illustré sur la figure 1, le volume interne 20 du boitier 12 est destiné à recevoir une pluralité de cellules électrochimiques 22 successives suivant une direction longitudinale L.

Chaque cellule de la pluralité de cellules 22 comprend par exemple une enveloppe de forme généralement parallélépipédique et recevant, de manière connue et non représentée, un empilement d'éléments électrochimiques baignant dans un électrolyte.

Chaque cellule 22 comprend un premier organe de contact 24, électriquement conducteur, adapté pour relier électriquement la cellule à une première borne 26, positive ou négative, du boitier 12.

Dans l'exemple de la figure 1, chaque cellule 22 comprend également un deuxième organe de contact 28, électriquement conducteur, adapté pour relier électriquement la cellule à une deuxième borne électrique 30, négative ou positive, du boitier 12.

Sur la figure 1, les premier et deuxième organes de contact 24, 28 sont situés sur une face supérieure 32 des cellules 22.

Par « supérieure », on entend par exemple opposée au fond 14 du boitier 12 selon une direction d'élévation Z perpendiculaire au couvercle 18.

Les premier et deuxième organes de contact 24, 28 sont en particulier espacés selon une direction transversale T, perpendiculaire aux directions longitudinale L et d'élévation Z.

Dans l'exemple de la figure 1, les premiers organes de contact 24 et les deuxième organes de contact 28 des cellules 22 sont connectés électriquement entre eux via des connecteurs 34, 36, 37.

Le boitier 12, en particulier l'une des faces latérales 16 comprend deux ouvertures 38, 40 au travers desquelles s'étendent les bornes 26, 30. Chaque borne 26, 30 est électriquement liée à l'un des connecteurs 34, 36 ou 37, de manière à assurer la connexion électrique entre chaque cellule 22 de chaque module 10.

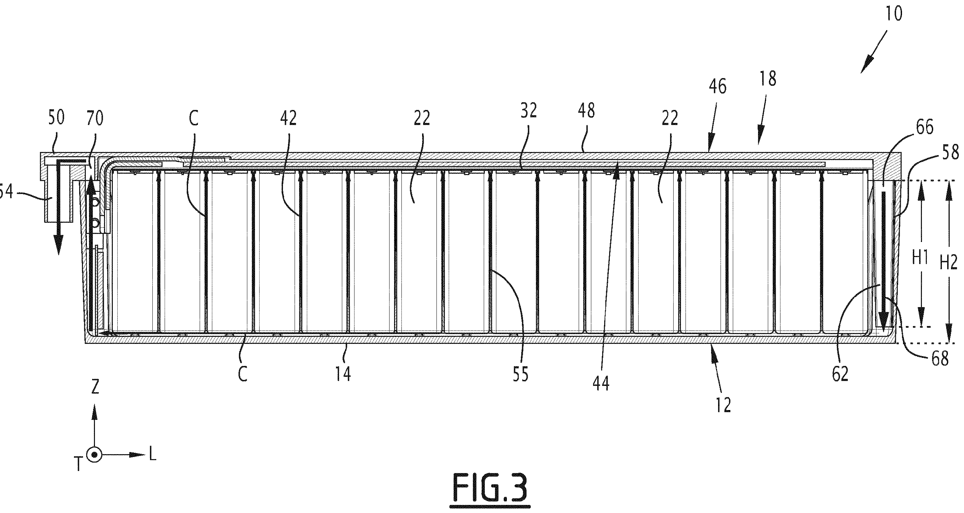

Entre chaque cellule 22 successive, le module 10 comprend un séparateur 42, visible sur les figures 1 et 3. A titre d'exemple non limitatif, chaque séparateur 42 est un film réalisé en matière plastique telle que le polyamide, le polytéréphtalate de butylène, le silicone, les polyépoxydes, etc., renforcés ou non.

Ainsi, les cellules 22 sont disposées à l'écart les unes des autres selon la direction longitudinale L. Par « à l'écart », on entend qu'au moins en certains points des faces latérales de deux cellules 22 successives, par exemple sur l'ensemble de la surface des faces latérales, lesdites cellules 22 ne sont pas en contact direct.

Dans une variante, le module 10 ne comprend pas de séparateur 42. Dans cet exemple, les faces latérales d'une cellule 22 sont par exemple en contact direct au moins en certains points avec les faces latérales des cellules 22 voisines. Les faces latérales de deux cellules 22 voisines sont par exemple adaptées pour définir entre elles des canaux de circulation.

Les cellules 22 sont également disposées à l'écart du fond 14 selon la direction d'élévation Z.

Le boitier 12 est par exemple conçu pour effectuer une compression, selon la direction longitudinale L, des cellules 22 entre elles, et en particulier par l'intermédiaire des séparateurs 42.

Le couvercle 18 comprend une face interne 44 dirigée vers le volume interne 20 et une faxe externe 46 opposée à la face interne 44 selon la direction d'élévation Z.

Dans l'exemple des figures 1 à 3, le couvercle 18 comprend une première portion 48 fermant le boitier 12 et une seconde portion 50 prolongeant la première portion 48 selon la direction longitudinale L.

En d'autres termes, la première portion 48 s'étend en regard, selon la direction d'élévation Z, du volume interne 20 lorsque le couvercle 18 ferme le boitier 12 et la seconde portion 50 s'étend à l'extérieur du boitier 12, selon la direction longitudinale L.

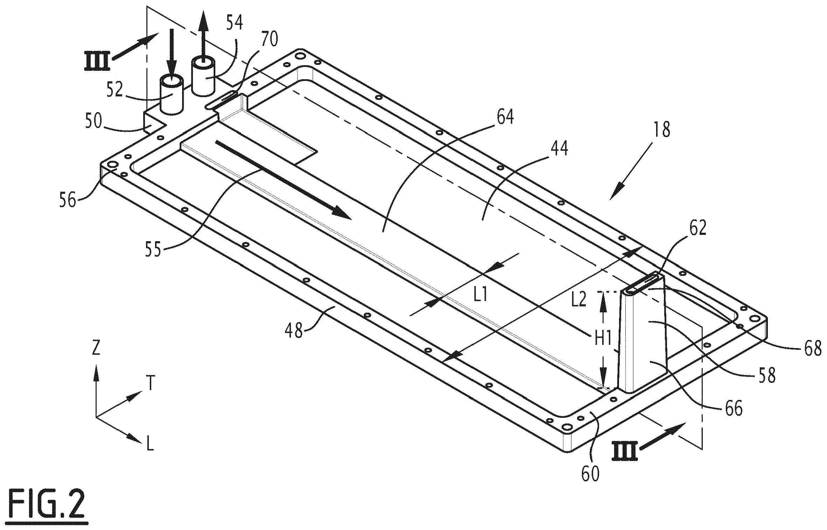

Selon l'invention, et en référence à la figure 2, le couvercle 18 comprend au moins une entrée 52 et une sortie 54 pour un fluide de refroidissement 55. L'entrée 52 et la sortie 54 sont par exemple reliées à une source externe, non représentée, de fluide de refroidissement 55.

Le fluide de refroidissement 55 est un fluide diélectrique, par exemple choisi parmi les hydrocarbures, ou fluorocarbures. Tel qu'il sera décrit plus en détails ultérieurement, le fluide 55 en circulation permet de refroidir les cellules 22, par échanges thermiques au contact des cellules 22, lors de leur fonctionnement et d'éviter ainsi une surchauffe, ou encore un incendie dans le module 10.

Dans l'exemple particulier illustré sur la figure 2, l'entrée 52 et la sortie 54 sont situées sur la face interne 44 de la seconde portion 50. Ainsi, l'entrée 52 et la sortie 54 sont aptes à être connectées à la source externe de fluide de refroidissement 55, à l'extérieur du boitier 12.

Dans une variante, non représentée, le couvercle 18 comprend uniquement la première portion 48, et l'entrée 52 et la sortie 54 sont situées sur la face externe 46 de la première portion 48.

Le couvercle 18 définit alors avec le boitier 12 un chemin de circulation C du fluide 55 dans le couvercle 18 et dans le volume interne 20 entre l'entrée 52 et la sortie 54.

En particulier, dans ce mode de réalisation, l'entrée 52 et la sortie 54 sont situées sur une même première extrémité 56, prise selon la direction la direction longitudinale L, du couvercle 18.

Dans tout ce qui suit, les termes « amont » et « aval » seront employés relativement au sens de circulation de fluide 55 selon le chemin de circulation C entre l'entrée 52 et la sortie 54.

Dans un mode de réalisation particulier, le couvercle 18 comprend une portion saillante 58 s'étendant en saillie de la face interne 44 du couvercle 18 dans la direction d'élévation Z vers le fond 14 du boitier 12.

Dans l'exemple représenté, la portion saillante 58 est située sur une deuxième extrémité 60 du couvercle 18, opposée à la première extrémité 56 selon la direction longitudinale L. La portion saillante 58 s'étend en particulier entre, selon la direction longitudinale L, la pluralité de cellules 22 et la paroi latérale 16 du boitier 12.

A cet effet, l'une des faces latérales 16 comprend par exemple un évidement destiné à recevoir la portion saillante 58 lorsque le couvercle 18 ferme le boitier 12.

Dans l'exemple des figures 1 à 3, la portion saillante 58 définit un passage de circulation 62 du fluide de refroidissement 55 entre l'entrée 52 et le volume interne 20.

L'entrée 52 et la portion saillante 58 étant disposées sur deux extrémités opposées du couvercle 18, le couvercle 18 comprend par exemple un conduit de circulation 64, visible sur la figure 2, du fluide 55 défini entre l'entrée 52 et la portion saillante 58.

Dans l'exemple de la figure 2, le conduit de circulation 64 s'étend longitudinalement entre l'entrée 52 et la portion saillante 58 et présente une largeur L1, dans la direction transversale T, par exemple comprise entre 10 % et 90 % de la largeur L2 du couvercle 18 dans la direction transversale T.

La portion saillante 58 présente une largeur à une première extrémité 66 liée à la face interne 44, dans la direction transversale T, par exemple sensiblement égale à la largeur L1 du conduit de circulation 64.

Dans l'exemple de la figure 2, la portion saillante 58 présente par exemple une forme parallélépipédique creuse sensiblement convergente vers le fond 14 du boitier 12, sa largeur à une deuxième extrémité 68, opposée à la première extrémité 66 selon la direction d'élévation Z, étant par exemple inférieure ou égale à la largeur du conduit de circulation 64.

Dans un exemple particulier de réalisation, la portion saillante 58 s'étend sur une hauteur H1, dans la direction d'élévation Z entre la première extrémité 66 et la deuxième extrémité 68, comprise entre 1,0 % et 91 % de la hauteur H2, visible sur la figure 1, de la paroi latérale 16 du boitier 12 dans la direction d'élévation Z, par exemple supérieure à 50 % de la hauteur H2.

Ainsi, le passage de circulation 62 débouche en aval par la deuxième extrémité 68 à proximité du fond 14 du boitier 12.

Ceci présente l'avantage d'emmener le fluide de refroidissement 55 directement au contact des faces inférieures des cellules 22, opposées aux faces supérieures 32 des cellules 22, selon la direction d'élévation Z.

Le chemin de circulation C du fluide de refroidissement 55 s'étend donc en partie entre le fond 14 et les cellules 22.

En référence à la figure 3, et tel qu'il sera décrit plus en détails ultérieurement, le chemin de circulation C du fluide 55 continue ensuite entre chaque cellule 22 successive de façon à refroidir les cellules 22 par contact du fluide 55 avec leurs faces latérales.

Dans l'exemple des figures 2 et 3, la face interne 44 définit au moins un orifice collecteur 70 liant fluidiquement le volume interne 20 à la sortie 54.

L'orifice collecteur 70 est par exemple un orifice oblong.

Un procédé de refroidissement d'un module 10 tel que décrit ci-dessus va maintenant être décrit, en référence aux figures 2 et 3.

Tout d'abord, du fluide de refroidissement 55, tel qu'un hydrocarbure, ou fluorocarbure, arrive en amont via l'entrée 52.

Par exemple, une source de fluide, non représentée, introduit du fluide 55 dans l'entrée 52 du couvercle 18.

Le fluide 55 circule dans le conduit de circulation 64 jusqu'à rejoindre la première extrémité 66 de la portion saillante 58.

Le fluide 55 circule ensuite dans le passage de circulation 62 définit par la portion saillante 58, jusqu'à déboucher dans le volume interne 20 par la deuxième extrémité 68 de la portion saillante 58.

En particulier, le fluide 55 débouche dans le volume interne 20 par la deuxième extrémité 68 à proximité du fond 14 du boitier 12.

Le fluide 55 suit le chemin de circulation C, entre le fond 14 et les cellules 22, et la pression du fluide de refroidissement 55 qui circule en amont selon le chemin de circulation C entraine le fluide 55 en aval vers le couvercle 18 via l'espace résiduel entre chaque cellule 22.

En particulier, le fluide 55 percole entre chaque cellule 22, au contact des séparateurs 42 et/ou dans les canaux de circulation définis par les faces latérales de deux cellules 22 voisines.

Dans le cas où le module comprend des séparateurs 42, les séparateurs 42 sont par exemple perméables au fluide 55, et le fluide 55 imprègne les séparateurs 42 et circule « à travers » les séparateurs 42. Les séparateurs 42 étant perméables au fluide, ils autorisent également le fluide 55 à entrer en contact partiel avec les faces latérales des cellules 22.

En variante, les séparateurs 42 sont hermétiques au fluide 55. Dans ce cas, les séparateurs 42 sont par exemple des pièces pleines, non poreuse, comprenant par exemple des canaux usinés sur leurs faces latérales externe afin de laisser le fluide 55 circuler de part et d'autre, selon la direction longitudinale, des séparateurs 42 de façon à entrer en contact avec les faces latérales des cellules 22.

Le fluide 55 débouchant par le haut de chaque espace résiduel entre les cellules 22 circule ensuite entre le couvercle 18 et les faces supérieures 32 des cellules 22, jusqu'à rejoindre l'orifice collecteur 70.

Par communication fluidique entre l'orifice collecteur 70 et la sortie 54, le fluide 55 arrive en amont de l'orifice collecteur 70 et débouche en aval dans la sortie 54 et quitte ainsi le volume interne 20.

Le fluide 55 est alors par exemple collecté par un dispositif collecteur, non représenté, afin d'être refroidi et réinjecté, ou réintroduit via l'entrée 52 dans le volume interne 20.

En variante, un nouveau volume de fluide de refroidissement froid est introduit via l'entrée 52 dans le volume interne.

Dans une variante, non représentée, le module 10 ne comprend pas de portion saillante 58 et le fluide 55 est directement introduit dans le volume interne 20 depuis l'entrée 52.

Dans une autre variante, non représentée, la portion saillante 58 lie fluidiquement le volume interne 20 à la sortie 54. En d'autres termes, dans cette variante, le fluide 55 est collecté en sortie dans le volume interne 20 au fond 14 du boitier 12, via la portion saillante 58 et est ensuite acheminé vers la sortie 54 par circulation dans le passage de circulation 62.

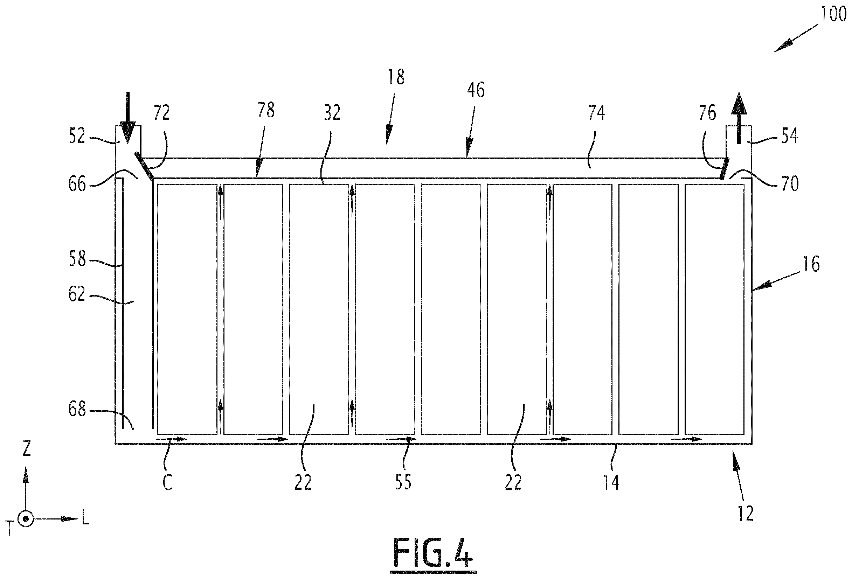

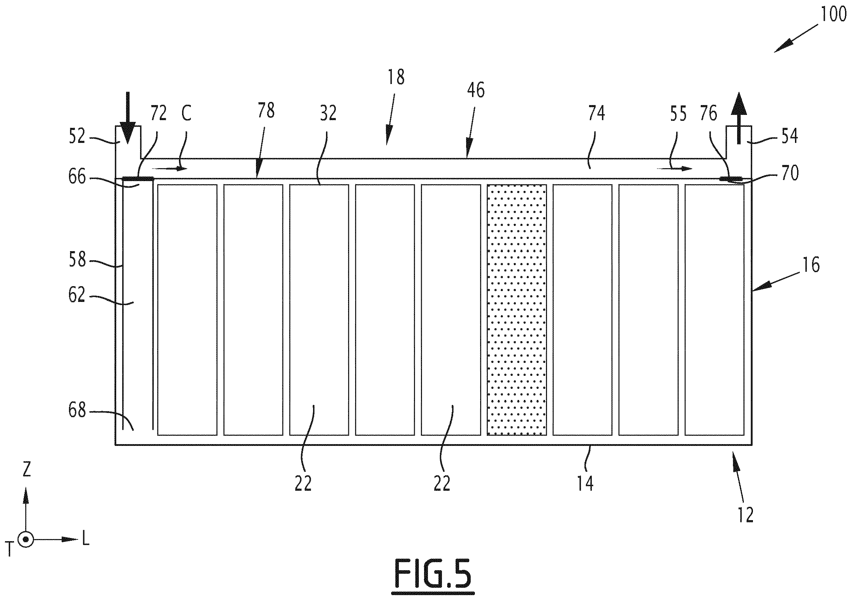

En référence aux figures 4 et 5, on va maintenant décrire un module 100 constituant un second mode de réalisation de l'invention.

Dans tout ce qui suit, le module 100 est analogue au module 10 représenté sur les figures 1 à 3. Les éléments du module 100 similaires aux éléments du module 10 portent les mêmes signes de référence et ne seront pas décrits à nouveau. Seuls les différences seront décrites en détail ci-après.

Dans ce second mode de réalisation, en référence à la figure 4, la portion saillante 58 et l'entrée 52 s'étendent sur la première extrémité 56 du couvercle 18.

La sortie 54, qui s'étend toujours à l'opposé de la portion saillante 58, s'étend sur la deuxième extrémité 60, à l'opposé de l'entrée 52 et de la portion saillante 58.

Le fluide 55 entrant en amont par l'entrée 52 circule alors directement dans le volume interne 20 via le passage de circulation 62, sans traverser le couvercle 18 au préalable.

Dans un exemple particulier de réalisation, le couvercle 18 comprend au moins un premier élément d'obturation 72 mobile entre une position ouverte (représentée sur la figure 4), dans laquelle l'au moins un premier élément d'obturation 72 autorise la circulation du fluide 55 dans le passage de circulation 62 formé par la portion saillante 58, et une position fermée (représentée sur la figure 5), dans laquelle l'au moins un premier élément d'obturation 72 obture le passage de circulation 62 formé par la portion saillante 58.

Dans la position fermée, le fluide 55 est destiné à circuler via un canal de circulation 74 définit dans le couvercle 18 entre l'entrée 52 et la sortie 54.

Dans la position fermée du premier élément d'obturation 72, le canal de circulation 74 lie donc fluidiquement l'entrée 52 et la sortie 54, tandis que dans la position ouverte du premier élément d'obturation 72, le canal de circulation est isolé du volume interne 20 au moins au niveau de l'entrée 52.

Par exemple, l'au moins un premier élément d'obturation 72 est situé à l'entrée du passage de circulation 62, à proximité de la face interne 44.

En particulier, l'au moins un premier élément d'obturation 72 est situé au niveau de la première extrémité 66 de la portion saillante 58, de façon à obstruer sélectivement le passage de circulation 62 et le canal de circulation 74 selon sa position ouverte ou fermée.

Dans l'exemple représenté, le couvercle 18 comprend au moins un deuxième élément d'obturation 76 mobile entre une position ouverte (représentée sur la figure 4) dans laquelle le ou chaque deuxième élément d'obturation 76 autorise la circulation du fluide 55 depuis le volume interne 20 jusqu'à la sortie 54 via l'orifice collecteur 70, et une position fermée (représentée sur la figure 5), dans laquelle le ou chaque deuxième élément d'obturation 76 obture l'orifice collecteur 70.

De manière avantageuse, dans ce mode de réalisation, l'orifice collecteur 70 est situé sur une face inférieure 78 du canal de circulation 74. La face inférieure 78 est par exemple confondue avec la face interne 44 du couvercle 18. Le deuxième élément d'obturation 76 est situé dans le canal de circulation 74, en amont de l'orifice collecteur 70 lorsque le fluide 55 circule de l'entrée 52 à la sortie 54.

En d'autres termes, le canal de circulation 74 est un chemin dévié et isolé, via les premier et deuxième éléments d'obturation 72, 76 du chemin de circulation C défini dans le volume interne 20.

Lorsque les premier et deuxième éléments d'obturation 72, 76 sont tous les deux en position ouverte (tel que représenté sur la figure 4), le fluide 55 circule, de l'amont vers l'aval, dans le boitier 12 par l'entrée 52, le passage de circulation 62, le fond 14 du boitier 12 et percole entre chaque cellule 22 jusqu'à rejoindre l'orifice collecteur 70 et la sortie 54.

Lorsque les premier et deuxième éléments d'obturation 72, 76 sont tous les deux en position fermée (tel que représenté sur la figure 5), le fluide 55 circule depuis l'entrée 52 jusqu'à la sortie 54 directement dans le canal de circulation 74 dans le couvercle 18 sans passer par le volume interne 20.

Le ou chaque élément d'obturation 72, 76 est notamment adapté pour passer de la position ouverte à la position fermée lorsqu'une valeur seuil de température dans le volume interne 20 est dépassée.

Par exemple, lorsque la température à l'intérieur du volume interne 20 dépasse 80°C, les éléments d'obturation 72, 76 passent de la position ouverte à la position fermée, et isolent le volume interne 20 de l'entrée 52 et de la sortie 54 de fluide 55.

Par exemple, au moins une partie de support, non représentée, des éléments d'obturation 72, 76 est réalisée en un matériau présentant une résistance thermique plus faible que celle du couvercle 18. Ainsi, sous l'effet d'une élévation de température dans le volume interne 20, la partie de faible résistance thermique s'amollit et libère les éléments d'obturation 72, 76 qui, par exemple par gravité, tombent dans la position fermée.

Ce fonctionnement est par exemple appelé « fonctionnement dégradé » du système de refroidissement du module 100 et est particulièrement avantageux en cas d'emballement thermique de l'une des cellules 22 dans le module 100, tel que représenté sur la figure 5.

Les éléments d'obturation 72, 76 isolant le volume interne 20 du module défectueux, l'emballement thermique est plus facilement contrôlé et ne se propage pas aux autres modules 100 constituant la batterie.

En parallèle, le fluide 55 piégé dans le volume interne 20 continue de refroidir les cellules 22 du module 100, par exemple par échange thermique avec le fluide 55 circulant dans le couvercle 18 entre l'entrée 52 et la sortie 54 via le canal de circulation 74.

Le couvercle 18 agit alors comme une plaque de refroidissement des faces supérieures 32 des cellules 22.

Le module 10, 100 de stockage d'énergie tel que décrit ci-dessus présente de nombreux avantages.

Dans chacun des modes de réalisation décrits ci-dessus, les entrée 52 et sortie 54 du circuit de refroidissement sont situées sur le couvercle 18. Ainsi, le boitier 12 peut être réalisé simplement, sans contrainte d'étanchéité, notamment à proximité des bornes de connexion 26, 30.

Le couvercle 18 est ainsi fonctionnel et permet, en plus de fermer le boitier 12 de manière étanche, de faire circuler le fluide de refroidissement 55 dans le volume interne 20 afin de refroidir efficacement les cellules 22 lors de leur fonctionnement.

Grâce aux caractéristiques décrites ci-dessus, les boitiers 12 des modules 10 et 100 sont donc simples à fabriquer, les modules 10 et 100 permettent un refroidissement efficace des cellules 22 et présentent une bonne étanchéité

Par ailleurs, dans le module 100 constituant un second mode de réalisation de l'invention, les éléments d'obturation 72, 76 permettent au module 100 de fonctionner en « mode dégradé » même lorsque l'une des cellules 22 du module 100 subit un emballement thermique.

### Liste des références :

10, 100 : module de stockage d'énergie selon les premier et second modes de réalisation
12 : boitier
14 : fond
16 : paroi latérale
18 : couvercle
20 : volume interne
22 : cellules
24 : premier organe de contact
26 : première borne
28 : deuxième organe de contact
30 : deuxième borne
32 : face supérieure des cellules
34, 36, 37 : connecteurs
38 : première ouverture
40 : deuxième ouverture
42 : séparateurs
44 : face interne du couvercle
46 : face externe du couvercle
48 : première portion du couvercle
50 : seconde portion du couvercle
52 : entrée
54 : sortie
55 : fluide de refroidissement
56 : première extrémité du couvercle
58 : portion saillante
60 : deuxième extrémité du couvercle
62 : passage de circulation
64 : conduit de circulation
66 : première extrémité de la portion saillante
68 : deuxième extrémité de la portion saillante
70 : orifice collecteur
72 : premier élément d'obturation
74 : canal de circulation
76 : deuxième élément d'obturation
78 : face inférieure du canal de circulation
L : direction longitudinale
Z : direction d'élévation
T : direction transversale
C : chemin de circulation
L1 : largeur du conduit de circulation
L2 : largeur du couvercle
H1 : hauteur de la portion saillante
H2 : hauteur de la paroi latérale

## Revendications

1. Module (10 ; 100) de stockage d'énergie comprenant :
- une pluralité de cellules électrochimiques (22) successives suivant une direction longitudinale (L),
- un boitier (12) comprenant un fond (14) et une paroi latérale (16),
- un couvercle (18) fermant le boitier (12) et définissant avec le boitier (12) un volume interne (20) destiné à recevoir la pluralité de cellules (22), le couvercle (18) comprenant une face interne (44) dirigée vers le volume interne (20) et une face externe (46) opposée à la face interne (44) selon une direction d'élévation (Z) perpendiculaire au couvercle (18),
**caractérisé en ce que** le couvercle (18) comprend au moins une entrée (52) et une sortie (54) pour un fluide de refroidissement (55), le couvercle (18) et le boitier (12) définissant un chemin de circulation (C) du fluide (55) dans le couvercle (18) et dans le volume interne (20) entre l'entrée (52) et la sortie (54).

2. Module (10 ; 100) selon la revendication 1, dans lequel les cellules (22) sont disposées à l'écart du fond (14) dans la direction d'élévation (Z), et à l'écart les unes des autres selon la direction longitudinale (L), le chemin de circulation (C) s'étendant entre le fond (14) et les cellules (22) et entre deux cellules (22) successives de l'une quelconque de la pluralité de cellules (22).

3. Module (10 ; 100) selon la revendication 1 ou 2, dans lequel le couvercle (18) comprend une portion saillante (58) s'étendant en saillie de la face interne (44) du couvercle (18) dans la direction d'élévation (Z) vers le fond (14) du boitier (12).

4. Module (10 ; 100) selon la revendication 3, dans lequel la portion saillante (58) définit un passage de circulation (62) pour le fluide de refroidissement (55) entre l'entrée (52) et le volume interne (20).

5. Module (10 ; 100) selon la revendication 3 ou 4, dans lequel la portion saillante (58) s'étend entre la pluralité de cellules (22) et la paroi latérale (16) du boitier (12).

6. Module (10 ; 100) selon l'une quelconque des revendications 3 à 5, dans lequel la portion saillante (58) s'étend sur une hauteur (H1), dans la direction d'élévation (Z), comprise entre 1,0 % et 91 % de la hauteur (H2) de la paroi latérale (16) du boitier (12) dans la direction d'élévation (Z).

7. Module (10 ; 100) selon l'une quelconque des revendications 3 à 6, dans lequel la face interne (44) définit au moins un orifice collecteur (70) liant fluidiquement le volume interne (20) à la sortie (54).

8. Module (10 ; 100) selon l'une quelconque des revendications 3 à 7, dans lequel la portion saillante (58) et la sortie (54) s'étendent sur deux extrémités (56, 60) du couvercle (18) opposées selon la direction longitudinale (L).

9. Module (10) selon l'une quelconque des revendications 3 à 8, dans lequel la portion saillante (58) et l'entrée (52) s'étendent sur deux extrémités (56, 60) du couvercle (18) opposées selon la direction longitudinale (L), un conduit de circulation (C) du fluide (55) étant défini dans le couvercle (18) entre l'entrée (52) et la portion saillante (58).

10. Module (10) selon la revendication 9, dans lequel le couvercle (18) comprend une première portion (48) fermant le boitier (12) et une seconde portion (50) prolongeant la première portion (48) selon la direction longitudinale (L), l'entrée (52) et la sortie (54) étant situées sur la face interne (44) de la seconde portion (50).

11. Module (100) selon l'une quelconque des revendications 3 à 8, dans lequel la portion saillante (58) et l'entrée (52) s'étendent sur une même extrémité (56) du couvercle (18), prise selon la direction longitudinale.

12. Module (100) selon la revendication 11, dans lequel le couvercle (18) comprend au moins un premier élément d'obturation (72) mobile entre une position ouverte, dans laquelle l'au moins un premier élément d'obturation (72) autorise la circulation du fluide (55) dans le passage de circulation (62) formé par la portion saillante (58), et une position fermée, dans laquelle l'au moins un premier élément d'obturation (72) obture le passage de circulation (62) formé par la portion saillante (58), le fluide (55) étant destiné à circuler via un canal de circulation (74) défini dans le couvercle (18) entre l'entrée (52) et la sortie (54).

13. Module (100) selon la revendication 12, dans lequel le couvercle (18) comprend au moins un deuxième élément d'obturation (76) mobile entre une position ouverte dans laquelle le ou chaque deuxième élément d'obturation (76) autorise la circulation du fluide (55) depuis le volume interne (20) jusqu'à la sortie (54) via un orifice collecteur (70) défini dans la face interne (44) et liant fluidiquement le volume interne (20) à la sortie (54), et une position fermée, dans laquelle le ou chaque deuxième élément d'obturation (76) obture l'orifice collecteur (70).

14. Module (100) selon l'une quelconque des revendications 11 à 13, dans lequel le ou chaque élément d'obturation (72, 76) est adapté pour passer de la position ouverte à la position fermée lorsqu'une valeur seuil de température dans le volume interne (20) est dépassée.

15. Procédé de refroidissement comportant les étapes suivantes :
- obtention d'un module (10 ; 100) selon l'une quelconque des revendications précédentes, et
- circulation du fluide de refroidissement (55) entre l'entrée (52) et la sortie (54) dans le chemin de circulation (C).
